# EUROPÄISCHE PATENTSCHRIFT

(11) **EP 1 915 552 B1**
(45) Veröffentlichungstag und Bekanntmachung des Hinweises auf die Patenterteilung: **15.12.2010**
(21) Anmeldenummer: 06776604.8
(22) Anmeldetag: 04.08.2006
(51) Int. Cl.: F16H 25/22

(54) **KUGELGEWINDETRIEB UND VERFAHREN ZUR VERSCHIEBUNG EINER GEWINDESPINDEL BEI EINEM KUGELGEWINDETRIEB**
BALL SCREW AND METHOD FOR DISPLACING A THREADED SPINDLE IN A BALL SCREW
VIS D'ENTRAINEMENT A BILLES, ET PROCEDE POUR DEPLACER UNE BROCHE FILETEE DANS UNE VIS D'ENTRAINEMENT A BILLES

(30) Priorität: 19.08.2005 DE 102005040204
(43) Veröffentlichungstag der Anmeldung: 30.04.2008
(73) Patentinhaber: Danaher Linear GmbH, 72649 Wolfschlugen (DE)
(72) Erfinder: SCHROEPPEL, Winfried, 72800 Eningen u.A. (DE); HAASS, Timo, 64572 Buettelborn (DE)
(74) Vertreter: Hoeger, Stellrecht & Partner Patentanwälte
(86) Internationale Anmeldenummer: PCT/EP2006/007732
(87) Internationale Veröffentlichungsnummer: WO 2007/019975

(56) Entgegenhaltungen:
- GB-A- 2 272 205
- US-A- 3 404 580
- US-A- 3 422 696
- US-A- 5 899 114

## Beschreibung

Die Erfindung betrifft einen Kugelgewindetrieb, umfassend eine Gewindemutter mit Gewindekanälen für Wälzkörper, eine Gewindespindel mit Gewindekanälen für Wälzkörper, eine Zwischenhülse, welche zwischen der Gewindemutter und der Gewindespindel angeordnet ist, wobei die Zwischenhülse Gewindekanäle aufweist, welche der Gewindemutter zuweisen und an die Gewindekanäle der Gewindemutter angepasst sind, und Wälzkörper in diesen Gewindekanälen geführt sind, und wobei die Zwischenhülse Gewindekanäle aufweist, welche der Gewindespindel zugewandt sind und an deren Gewindekanäle angepasst sind, und in diesen Gewindekanälen Wälzkörper geführt sind, eine erste Gewindeeinrichtung, welche über die einander zuweisenden Gewindekanäle der Gewindemutter und der Zwischenhülse gebildet ist, und eine zweite Gewindeeinrichtung, welche über die einander zuweisenden Gewindekanäle der Zwischenhülse und der Gewindespindel gebildet ist, wobei die erste Gewindeeinrichtung und die zweite Gewindeeinrichtung gegenläufig zueinander sind.

Die Erfindung betrifft ferner ein Verfahren zur Verschiebung einer Gewindespindel bei einem Kugelgewindetrieb, bei welchem eine Zwischenhülse in einer Drehbewegung angetrieben wird, wobei die Zwischenhülse in einer Gewindemutter über Wälzkörper und Gewindekanäle drehbar gelagert ist und die Gewindespindel in der Zwischenhülse über Wälzkörper und Gewindekanäle drehbar gelagert ist, die Gewindespindel in eine Drehbewegung mit gegenläufiger Drehrichtung zur Drehung der Zwischenhülse an der Gewindemutter versetzt wird, und die Zwischenhülse und die Gewindespindel in der gleichen Linearrichtung verschoben werden.

Kugelgewindetriebe werden bei verschiedenen Anwendungen eingesetzt. Ausführungsformen von Kugelgewindetrieben sind beispielsweise in dem Buch "Kugelgewindetriebe und Linearführungen" von J. Ackermann, Verlag Moderne Industrie, 1991 beschrieben.

Aus der EP 1 350 988 A1 ist ein Kugelgewindetrieb mit einer Gewindespindel und mit einer Gewindemutter, welche jeweils aneinander angepasste Gewindekanäle aufweisen, in denen Wälzkörper geführt sind, bekannt. Es sind ein oder mehrere Rückführungskanäle zur Rückführung von Wälzkörpern mit einer im wesentlichen axialen Rückführungsrichtung vorgesehen, wobei zur Umlenkung aus einem Gewindekanal In einen Rückführungskanal oder umgekehrt ein Umlenkelement vorgesehen ist.

Aus der DE 197 05 106 A1 ist eine Vorrichtung zur Betätigung einer Fahrzeugbremse mit einer zentralen Gewindespindel bekannt. Die Gewindespindel ist in einem ortsfesten Gehäuse gegen Verdrehung gesichert sowie zu einer Bremsscheibe der Fahrzeugbremse hin und von dort fort axial verschiebbar angeordnet. Die Vorrichtung umfasst eine die Spindel gemeinsam mit Wälzkörpern umgebende Spindelmutter, welche an dem drehbaren Läufer eines Elektromotors stirnseitig angekoppelt ist. Die Spindelmutter ist von einer weiteren Mutter umgeben und in dieser über Wälzkörper drehbar gelagert, die in dem ortsfesten Gehäuse als äußere Mutter axial gehalten ist.

Die EP 0 151 788 offenbart ein Kugelgewindetrieb mit einem Kolben, welcher innerhalb eines Körpers mit einer Drehmoment-übertragenden ersten Kugelbahn hin- und herverschiebbar angeordnet ist.

Aus der GB 2 272 205 A, die die Merkmale des Oberbegriffs des Anspruchs 1 beinhaltet, ist ein differenzieller Linearaktuator bekannt, welcher ein Aktuatorgehäuse mit einem offenen Ende aufweist. Es ist eine Antriebshülse vorgesehen, welche über einen Zwischenaktuator rotiert wird. Dieser Zwischenaktuator ist konzentrisch zwischen dem Aktuatorgehäuse und der Zwischenhülse montiert. Es sind dabei Mechanismen mit rezirkulierenden Kugeln in entgegengesetzter Richtung vorgesehen.

Aus der US 5,899,114 ist ein differenzieller Kugelgewindetrieb bekannt.

Aus der US 3,404,580 ist eine Kugelgewindeaktuator bekannt, welcher eine nicht-rotierende Mutter, ein rotierendes und translatorisch verschiebliches Element, ein verschiebliches Element und ein Rotationseingabeelement umfasst, welches antriebswirksam mit dem rotierbaren und translationsverschieblichen Element verbunden ist.

Der Erfindung liegt die Aufgabe zugrunde, einen Kugelgewindetrieb der eingangs genannten Art bereitzustellen, welcher bei kompakter Bauweise einen großen Gewindespindelhub aufweist.

Diese Aufgabe wird bei dem eingangs genannten Kugelgewindetrieb erfindungsgemäß dadurch gelöst, dass drehfest mit der Zwischenhülse eine Magneteinrichtung verbunden ist und dass die Magneteinrichtung über die Verschieblichkeit der Zwischenhülse relativ zu einer Statoreinrichtung verschieblich ist.

Bei einem solchen Kugelgewindetrieb ist die Gewindespindel über sich abrollende Wälzkörper in der Zwischenhülse drehbar gelagert und die Zwischenhülse ist über sich abrollende Wälzkörper drehbar in der Gewindemutter gelagert. Dadurch ergibt sich eine Art von Teleskop-Lagerung für die Gewindespindel. Eine Rotationsbewegung der Zwischenhülse lässt sich bei entsprechender Gewindeausbildung in eine reine Linearbewegung der Gewindespindel umsetzen.

Es lassen sich bei kompakter Bauweise große Hubwege für die Gewindespindel erreichen, da die Gewindespindel in der Zwischenhülse eine Hubbewegung durchführen kann und die Zwischenhülse in der Gewindemutter eine Hubbewegung durchführen kann.

Ferner lassen sich große Kräfte übertragen, da beispielsweise eine optimierte Drehmomenteinleitung in die Zwischenhülse möglich ist.

An einer Anwendung muss keine Lagerung der Gewindespindel vorgesehen werden, da die Gewindespindel eine reine Hubbewegung durchführt, d.h. eine Fixierung der Gewindespindel an der Anwendung ist ausreichend.

Eine erste Gewindeeinrichtung, welche über die einander zuweisenden Gewindekanäle der Gewindemutter und der Zwischenhülse gebildet ist, und eine zweite Gewindeeinrichtung, welche über die einander zuweisenden Gewindekanäle der Zwischenhülse und der Gewindespindel gebildet ist, sind gegenläufig zueinander. Die eine Gewindeeinrichtung weist ein Linksgewinde auf und die andere Gewindeeinrichtung weist ein Rechtsgewinde auf. Dadurch lässt sich bei einer Rotation der Zwischenhülse eine reine Linearbewegung der Gewindespindel realisieren.

Drehfest mit der Zwischenhülse ist eine Magneteinrichtung und insbesondere Permanentmagneteinrichtung verbunden. Durch die elektromagnetische Kopplung zwischen einer Statoreinrichtung und der Magneteinrichtung lässt sich die Zwischenhülse in eine Rotationsbewegung versetzen, wobei die Richtung der Rotation, der Rotationswinkel und die Winkelgeschwindigkeit steuerbar ist.

Die Magneteinrichtung ist über die Verschieblichkeit der Zwischenhülse relativ zu der Statoreinrichtung verschieblich. Es ist dann vorteilhaft, wenn die Magneteinrichtung eine axiale Länge aufweist, welche größer ist als die axiale Länge einer Statoreinrichtung, so dass bei jeder Stellung und insbesondere Verschiebungsstellung der Zwischenhülse eine elektromagnetische Kopplung zwischen der Statoreinrichtung und der Magneteinrichtung vorliegt. Die axiale Länge der Magneteinrichtung ist bestimmt durch den Verschiebungshub der Zwischenhülse. Dieser Verschiebungshub der Zwischenhülse ist jedoch kleiner als der maximal mögliche Verschiebungshub der Gewindespindel, so dass sich ein kompakter Aufbau ergibt.

Insbesondere ist die Gewindespindel relativ zur Gewindemutter drehfest translationsverschieblich. Dadurch ergibt sich ein einfacher Aufbau. Weiterhin lässt sich die Gewindespindel auf einfache Weise an eine Anwendung ankoppeln.

Weiterhin ist günstigerweise die Zwischenhülse relativ zur Gewindemutter drehbar. Die entsprechende Rotationsbewegung lässt sich beispielsweise durch einen Motor antreiben und in eine Linearbewegung der Gewindespindel mit entsprechend hohem Gewindespindelhub umsetzen.

Insbesondere ist die Zwischenhülse relativ zur Gewindemutter translationsverschieblich. Dadurch lässt sich eine Art von Teleskopführung mit entsprechend großen Hublängen für die Gewindespindel erreichen.

Günstigerweise ist die Gewindespindel relativ zur Zwischenhülse drehbar. Durch die Drehbarkeit der Zwischenhülse in der Gewindemutter lässt sich über die Drehbarkeit der Gewindespindel relativ zur Zwischenhülse (welche in der Drehrichtung gegenläufig zur Drehung der Zwischenhülse in der Gewindemutter ist) eine reine Linearbeweglichkeit für die Gewindespindel relativ zur Gewindemutter erreichen.

Günstig ist es, wenn eine Wälzkörper-Rückführungseinrichtung an der Gewindemutter angeordnet ist. Dadurch lassen sich in den Gewindekanälen abrollende Wälzkörper von einem Endpunkt zu einem Ausgangspunkt zurückführen. Durch die Anordnung an der Gewindemutter lässt sich die Zwischenhülse mit geringen Wandstärken ausbilden. Dadurch wiederum ergibt sich eine kompakte Bauweise des Kugelgewindetriebs.

Aus dem gleichen Grund ist es günstig, wenn eine Wälzkörper-Rückführungseinrichtung an der Gewindespindel angeordnet ist. Dadurch lässt sich die Zwischenhülse auf einfache Weise ausbilden.

Eine Wälzkörper-Rückführungseinrichtung kann durch ein Umlenkrohrsystem oder Umlenkstücksystem gebildet sein. Bei einem Umlenkrohrsystem werden Wälzkörper über ein oder mehrere Rohre von einem Endpunkt zu.einem Ausgangspunkt zurückgeführt. Bei einem Umlenkstücksystem, welches Umlenkstücke oder Umlenkleisten aufweist, durchlaufen abrollende Wälzkörper weniger als einen Gewindegang, bevor sie von einem Endpunkt zu einem Anfangspunkt zurückgeführt werden. Ein Umlenkstücksystem lässt sich mit geringen radialen Abmessungen ausbilden.

Es kann vorgesehen sein, dass die Gewindespindel einen Gewindebereich und einen Nicht-Gewindebereich aufweist, welcher sich nach vorne erstreckt. Insbesondere ist über den Nicht-Gewindebereich eine Schubstange gebildet. Dadurch lassen sich die Herstellungskosten erniedrigen, da ein Gewindebereich nur dort vorgesehen werden muss, wo ein Eingriff mit der Zwischenhülse vorliegt.

Insbesondere weist der Nicht-Gewindebereich einen kleineren Durchmesser als der Gewindebereich auf. Dadurch kann die Gewindespindel mit ihrem Nicht-Gewindebereich in der Zwischenhülse ohne mechanischen Kontakt eingetaucht werden.

Insbesondere ist der maximale Hub der Gewindespindel bestimmt durch die Summe des Hubs der Zwischenhülse an der Gewindemutter und des Hubs der Gewindespindel an der Zwischenhülse. Dadurch ergibt sich bei kompakter Bauweise des Kugelgewindetriebs ein großer Gewindespindelhub.

Bei einer Ausführungsform ist es vorgesehen, dass die Zwischenhülse rotatorisch angetrieben ist. Diese Drehbewegung lässt sich in eine Translationsbewegung der Gewindespindel umsetzen, wobei die Gewindespindel ohne Verdrehung gegenüber der Gewindemutter translationsverschieblich ist.

Es kann dabei vorgesehen sein, dass die Zwischenhülse ein Rotor oder Teil eines Rotors eines Motors und insbesondere eines Elektromotors ist. Dadurch lässt sich die Zwischenhülse direkt antreiben. Dadurch wiederum ergibt sich eine hohe Kraftübertragung mit minimiertem Verschleiss.

Ganz besonders vorteilhaft ist es, wenn ein Motor vorgesehen ist, an welchen die Zwischenhülse insbesondere direkt gekoppelt ist. Dadurch lässt sich ein kompakter angetriebener Kugelgewindetrieb bereitstellen.

Insbesondere ist die Zwischenhülse eine Motorwelle oder Teil einer Motorwelle. Ganz besonders vorteilhaft ist es, wenn der Motor ein Elektromotor ist. Dadurch lässt sich die Zwischenhülse mit minimiertem Verschleiss antreiben. Es ergibt sich eine kompakte Bauweise. Beispielsweise ist der Elektromotor ein Synchronmotor mit einer Permanentmagneteinrichtung an einem Rotor.

Insbesondere ist ein feststehender Teil des Motors fest bezüglich der Gewindemutter angeordnet. Bei dem feststehenden Teil handelt es sich insbesondere um eine elektromagnetische Statoreinrichtung.

Günstig ist es, wenn die Gewindemutter an einem Gehäuse, welches den Motor aufweist, angeordnet ist. Dadurch ergibt sich ein kompakter Aufbau für einen Kugelgewindetrieb mit integriertem Antrieb.

Es ist vorteilhaft, wenn in dem Gehäuse eine Statoreinrichtung angeordnet ist. Dadurch lässt sich auf einfache Weise ein Elektromotor zum Antrieb der Zwischenhülse ausbilden.

Bei einer bevorzugten Ausführungsform weist die Magneteinrichtung eine Mehrzahl von (Permanent-)Magneten auf, welche um eine Achse der Zwischenhülse angeordnet sind. Dadurch ergibt sich bei einfachem Aufbau des Kugelgewindetriebs eine hohe Kraftübertragungsmöglichkeit.

Insbesondere sind die Magnete als Streifen ausgebildet. Die Streifen sind dabei vorzugsweise aus einem permanentmagnetischen Material mit hoher Remanenz hergestellt. Sie lassen sich auf einfache Weise an einem entsprechenden mit der Zwischenhülse drehfest verbundenen Halter fixieren, beispielsweise durch Aufkleben.

In diesem Zusammenhang ist es günstig, wenn die Magnete flach ausgebildet sind.

Günstig ist es, wenn die Magnete an einem Halter angeordnet sind, welcher drehfest mit der Zwischenhülse verbunden ist. Durch das Vorsehen eines Halters, welcher drehfest mit der Zwischenhülse verbunden ist, lassen sich beispielsweise die Magnete in einem größeren radialen Abstand zu der Achse der Zwischenhülse anordnen. Dadurch lässt sich ein großes Drehmoment auf die Zwischenhülse übertragen.

Günstig ist es, wenn ein Winkelgeber vorgesehen ist. Durch den Winkelgeber lässt sich die Winkelstellung der Zwischenhülse zu jedem Zeitpunkt ermitteln. Dadurch kann ein Elektromotor wie beispielsweise ein Torque-Elektromotor entsprechend angesteuert werden. Weiterhin lässt sich dann auch die Linearposition der Gewindespindel zu jedem Zeitpunkt ermitteln.

Insbesondere ist der Winkelgeber mit einer Motorsteuerung verbunden. Es lässt sich dann eine Strombeaufschlagung einer Statoreinrichtung in Abhängigkeit der ermittelten Winkelposition der Zwischenhülse steuern, um eine definierte Bewegung der Zwischenhülse zu erhalten.

Insbesondere weist der Winkelgeber eine erste Einrichtung auf, welche drehfest relativ zur Gewindemutter angeordnet ist, und weist eine zweite Einrichtung auf, welche mit der Zwischenhülse drehbar ist. Dadurch lässt sich die Winkelstellung der Zwischenhülse relativ zur Gewindemutter erfassen.

Insbesondere ist die zweite Einrichtung an einen Gleitbereich der Zwischenhülse gekoppelt. Durch das Vorsehen des Gleitbereichs lässt sich die Lagerstabilität der Zwischenhülse am Kugelgewindebereich verbessern. Durch die Kopplung der zweiten Einrichtung an den Gleitbereich der Zwischenhülse lässt sich auf einfache Weise die Winkelposition der Zwischenhülse erfassen.

Insbesondere ist die zweite Einrichtung an eine Welle gekoppelt, welche drehbar gelagert ist und an welcher die Zwischenhülse verschieblich gelagert ist. Dadurch lässt sich die Lagerungsfläche für die Zwischenhülse erhöhen. Insbesondere ist die Welle an die Zwischenhülse so gekoppelt, dass diese durch die Drehbewegung der Zwischenhülse in einer synchronen Drehbewegung angetrieben ist. Beispielsweise ist die Welle als Hohlwelle ausgebildet, in deren Hohlraum mindestens ein Teil eines Winkelgebers angeordnet ist. Durch die Welle lässt sich sowohl eine Gleitlagerung als auch eine Drehlagerung der Zwischenhülse bereitstellen und dabei über einen Winkelgeber die Winkelposition der Zwischenhülse ermitteln.

Der Erfindung liegt ferner die Aufgabe zugrunde, ein Verfahren zur Verschiebung einer Gewindespindel bei einem Kugelgewindetrieb bereitzustellen, mittels dem sich bei kompakter Bauweise ein hoher Gewindespindelhub erzielen lässt.

Diese Aufgabe wird erfindungsgemäß dadurch gelöst, dass die Winkelstellung der Zwischenhülse über einen Winkelgeber ermittelt wird und dass der Antrieb der Zwischenhülse mittels der durch den Winkelgeber ermittelten Winkelstellung gesteuert wird.

Das erfindungsgemäße Verfahren weist die bereits im Zusammenhang mit dem erfindungsgemäßen Kugelgewindetrieb erläuterten Vorteile auf.

Weitere vorteilhafte Ausgestaltungen wurden ebenfalls bereits im Zusammenhang mit dem erfindungsgemäßen Kugelgewindetrieb erläutert.

Insbesondere wird die Zwischenhülse über einen Elektromotor antrieben. Dadurch lässt sich auf einfache Weise eine direkte Drehmomentübertragung auf die Zwischenhülse erreichen, wobei hohe Kräfte übertragen werden können. Es ergibt sich ein kompakter Aufbau des entsprechenden Kugelgewindetriebs. Die Winkelstellung der Zwischenhülse wird über einen Winkelgeber ermittelt. Dadurch ist die Winkelstellung der Zwischenhülse und auch deren Winkelgeschwindigkeit sowie deren Drehrichtung zu jedem Zeitpunkt bekannt. Dadurch wiederum lässt sich eine Steuerung des Elektromotors und insbesondere die Strombeaufschlagung einer Statoreinrichtung auf einfache Weise realisieren.

Der Antrieb der Zwischenhülse wird mittels der durch den Winkelgeber ermittelten Winkelstellungen gesteuert. Dadurch lässt sich eine Positionierung der Gewindespindel in deren Verschiebungsrichtung mit hoher Genauigkeit erreichen.

Die nachfolgende Beschreibung bevorzugter Ausführungsformen dient im Zusammenhang mit der Zeichnung der näheren Erläuterung der Erfindung.

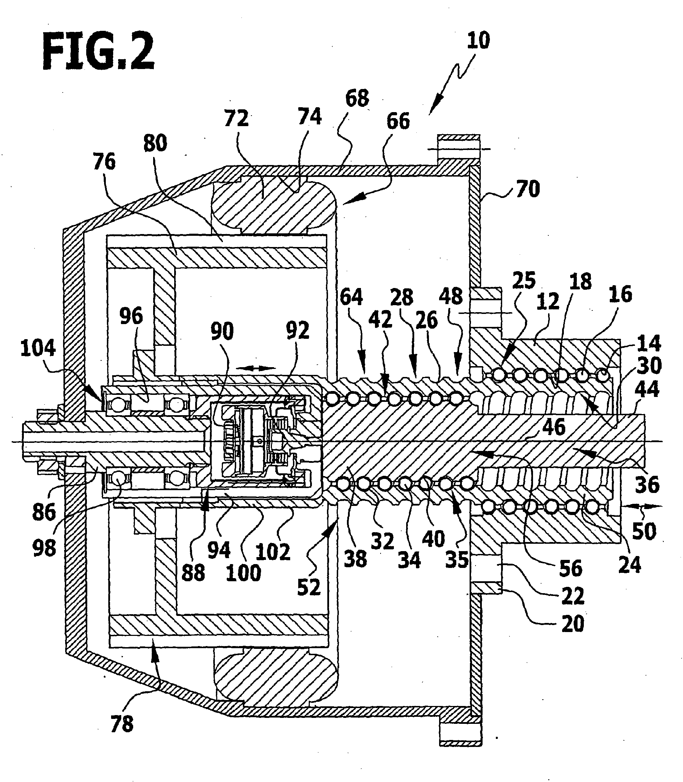

Es zeigen:
- Figur 1: eine teilperspektivische Schnittansicht eines Ausführungsbeispiels eines erfindungsgemäßen Kugelgewindetriebs mit eingefahrener Gewindespindel (Wälzkörper sind nicht eingezeichnet);
- Figur 2: eine Schnittansicht des Kugelgewindetriebs gemäß Figur 1; und
- Figur 3: eine teilperspektivische Schnittansicht des Kugelgewindetriebs gemäß Figur 1 mit ausgefahrener Gewindespindel.
Ein Ausführungsbeispiel eines erfindungsgemäßen Kugelgewindetriebs, welches in den Figuren 1 bis 3 schematisch gezeigt und dort mit 10 bezeichnet ist,

umfasst eine Gewindemutter 12 mit Gewindekanälen 14 zur Führung von Wälzkörpern 16 (Figur 2). Die Wälzkörper 16 sind insbesondere Wälzkugeln.

Die Gewindekanäle 14 der Gewindemutter 12 liegen auf einer Innenseite 18 der Gewindemutter 12.

Die Gewindemutter 12 weist einen ringförmigen Flansch 20 auf, welcher mit Befestigungsausnehmungen 22 versehen ist.

In der Gewindemutter 12 ist eine Zwischenhülse 24 geführt. Diese weist Gewindekanäle 26 auf, welche der Gewindemutter 12 zugewandt sind. Die Gewindekanäle 26 sind an die Gewindekanäle 14 der Gewindemutter 12 angepasst und an einer Außenseite 28 der Zwischenhülse 24 angeordnet. Durch die Gewindekanäle 14 und 26 sind Gewindebahnen für die Wälzkörper 16 gebildet, in denen die Wälzkörper 16 geführt sind. Dadurch ist eine erste Gewindeeinrichtung 25 gebildet, an der die Wälzkörper 16 abrollen können.

Die Zwischenhülse 24 ist hohlzylindrisch ausgebildet. An einer Innenseite 30, welche der Außenseite 28 gegenüberliegt, sind ebenfalls Gewindekanäle 32 gebildet. In diesen Gewindekanälen 32 sind Wälzkörper 34 (Figur 2), insbesondere Wälzkugeln, geführt.

In der Zwischenhülse 24 ist eine Gewindespindel 36 angeordnet. Diese umfasst einen Gewindebereich 38 mit Gewindekanälen 40, welche der Innenseite 30 der Zwischenhülse 24 zugewandt sind. Die Gewindekanäle 40 sind an einer Außenseite 42 des Gewindebereichs 38 der Gewindespindel 36 angeordnet. Sie sind an die Gewindekanäle 32 an der Innenseite 30 der Zwischenhülse 24 angepasst. Durch die Gewindekanäle 32 und 40 werden Gewindebahnen gebildet, in denen die Wälzkörper 34 geführt sind. Dadurch ist eine zweite Gewindeeinrichtung 35 gebildet, an der die Wälzkörper 34 abrollen können.

Die erste Gewindeeinrichtung 25 und die zweite Gewindeeinrichtung 35 sind gegenläufig zueinander als Links-Rechts-Gewindeeinrichtungen ausgebildet.

Die Gewindespindel 36 umfasst einen Nicht-Gewindebereich 44, welcher einen kleineren Durchmesser bezogen auf eine Achse 46 der Gewindespindel 36 aufweist. In dem Nicht-Gewindebereich 44 ist die Gewindespindel 36 beispielsweise glatt ausgebildet. Die Gewindespindel 36 ragt mit ihrem Nicht-Gewindebereich 44 nach vorne. Insbesondere ist über den Nicht-Gewindebereich 44 der Gewindespindel 36 eine Schubstange gebildet.

Die Achse 46 ist eine Drehachse der Zwischenhülse 24. Diese umfasst einen Gewindebereich 48, welcher die Gewindekanäle 26 an seiner Außenseite 28 und die Gewindekanäle 32 an seiner Innenseite 30 trägt. Die axiale Länge des Gewindebereichs 48 (längs der Achse 46) bestimmt den möglichen Hub der Zwischenhülse 24 bezogen auf die Gewindemutter 12.

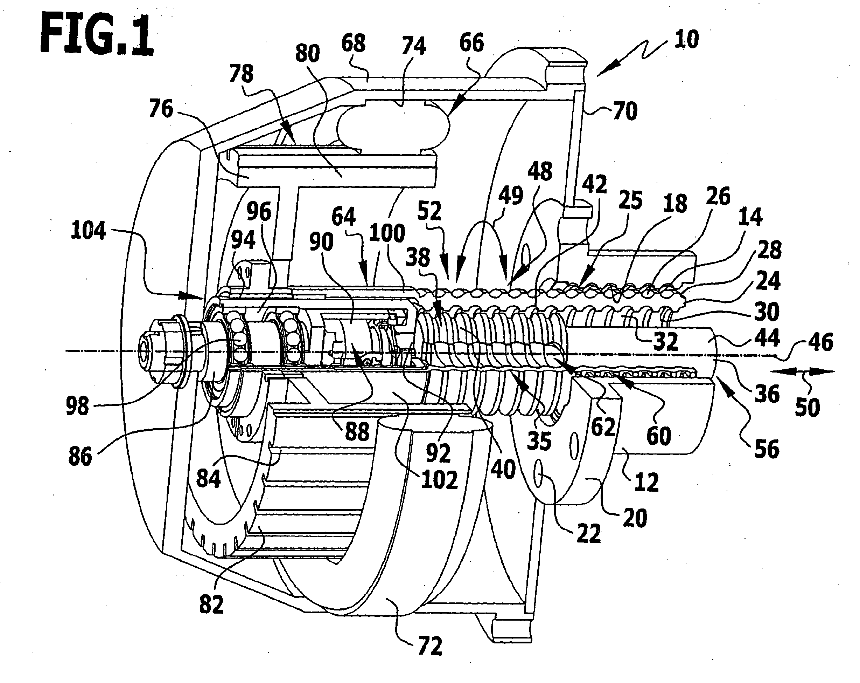

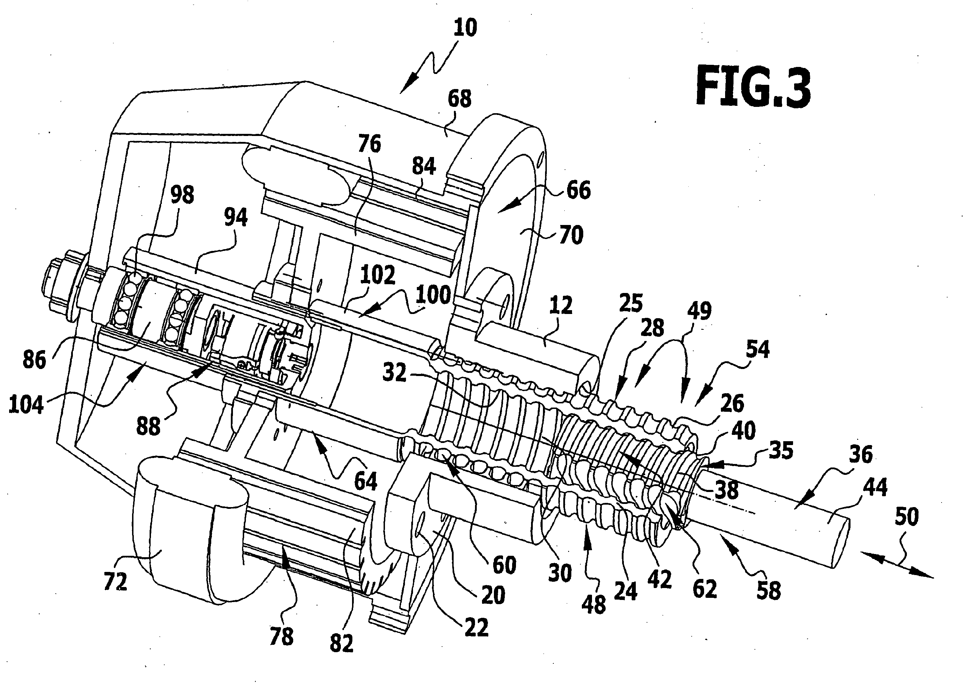

Die Zwischenhülse 24 ist relativ zur Gewindemutter 12 drehbar. Sie ist zur Durchführung der entsprechenden Drehbewegung rotatorisch angetrieben. Die Drehbarkeit der Zwischenhülse 24 ist in den Figuren 1 und 3 durch den Pfeil mit dem Bezugszeichen 49 angedeutet. Über Drehung der Zwischenhülse 24 lässt sich diese auch in einer Linearrichtung 50 verschieben.

In Figur 1 ist eine erste Stellung 52 der Zwischenhülse 24 gezeigt, bei welcher dieser in ihrer minimalen Hubstellung liegt. In dieser minimalen Hubstellung ragt die Zwischenhülse 24 am weitesten über die Gewindemutter 12 in einer Richtung entgegengesetzt zu dem Nicht-Gewindebereich 44 der Gewindespindel 36 heraus.

In Figur 3 ist eine zweite Stellung 54 der Zwischenhülse 24 gezeigt, welche bezogen auf die erste Stellung 52 eine maximale Hubstellung ist. In dieser zweiten Stellung 54 ragt die Zwischenhülse 24 am weitesten über die Gewindemutter 12 in Richtung des Nicht-Gewindebereichs 44 der Gewindespindel 36 heraus.

Die Gewindespindel 36 ist über ihren Gewindebereich 38 drehbar mit einer Drehachse koaxial zur Achse 46 in der Zwischenhülse 24 gelagert. Die Drehrichtung ist dabei gegenläufig zur Drehrichtung der Zwischenhülse 24 in der Gewindemutter 12. Die Gewindespindel 24 ist relativ zu der Gewindemutter 12 drehfest und in der Linearrichtung 50 translationsverschieblich gelagert. Bei einer Drehung der Zwischenhülse 24 wird die Gewindespindel 36 in der Linearrichtung 50 bewegt, wobei aufgrund der Drehlagerung der Gewindespindel 36 in der Zwischenhülse 24 der Hub der Gewindespindel 36 relativ zur Gewindemutter 12 größer ist als der Hub der Zwischenhülse 24 relativ zur Gewindemutter 12; der Hub der Gewindespindel 36 setzt sich zusammen aus dem Hub der Zwischenhülse 24 an der Gewindemutter 12 und dem Hub der Gewindespindel 36 in der Zwischenhülse 24, wobei der Gewindespindel 36 eine reine Linearbewegung in der Linearrichtung 50 aufprägbar ist.

In Figur 1 ist eine erste Stellung 56 ("eingefahrene Stellung") der Gewindespindel 36 gezeigt, in welcher diese maximal in die Zwischenhülse 24 eintaucht.

In Figur 3 ist eine zweite Stellung 58 ("ausgefahrene Stellung") der Gewindespindel 36 gezeigt, in welcher diese minimal in die Zwischenhülse 24 eingetaucht ist. Die Wegdifferenz in der Linearrichtung 50 zwischen der zweiten Stellung 58 und der ersten Stellung 56 definiert den Maximalhub der Gewindespindel 36.

Zur Rückführung der Wälzkörper 16 ist an der Gewindemutter 12 eine Wälzkörper-Rückführungseinrichtung 60 angeordnet. Es kann sich dabei beispielsweise um ein Umlenkrohrsystem handeln, bei dem Wälzkörper 16 über Umlenkrohre, welche an oder in der Gewindemutter 12 angeordnet sind, von einem Endpunkt zu einem Anfangspunkt zurückgeführt werden können und dadurch erneut zur Lastübertragung genutzt werden können. Es ist auch möglich, dass die Wälzkörper-Rückführungseinrichtung 60 beispielsweise als Umlenkstücksystem ausgebildet ist, bei denen die auf den Gewindekanälen 14 und 26 abrollenden Wälzkörper 16 nach etwas weniger als einem Gewindegang durch ein Umlenkstück bzw. eine Umlenkleiste von einem Endpunkt zu einem Ausgangspunkt zurückgeführt werden.

Die Gewindespindel 36 weist ebenfalls eine Wälzkörper-Rückführungseinrichtung 62 auf. Diese ist aus Platzgründen vorzugsweise als Umlenkstücksystem ausgebildet, bei der eine interne Wälzkörperrückführung an den Gewindekanälen 32, 40 erfolgt.

Die Zwischenhülse 24 ist vorzugsweise direkt angetrieben. Sie bildet eine Welle bzw. einen Teil einer Welle eines Motors. Insbesondere ist die Zwischenhülse 24 Teil eines Rotors 64 eines Elektromotors 66 wie beispielsweise eines Torque-Elektromotors. Insbesondere ist der Elektromotor 66 ein Synchronmotor.

Der Elektromotor 66 ist in einem Gehäuse 68 aufgenommen. Die Gewindemutter 12 sitzt an einer Stirnseite 70 des Gehäuses 68.

In dem Gehäuse 68 ist eine Statoreinrichtung 72 angeordnet, welche ein oder mehrere Statorspulen umfasst. Die entsprechenden Spulenwicklungen umgeben die Achse 46. Die Statoreinrichtung 72 sitzt beispielsweise an einer Innenseite 74 des Gehäuses 68.

Das Gehäuse 68 weist mindestens im Bereich der Statoreinrichtung 72 einen Innendurchmesser auf, welcher größer ist als der Außendurchmesser der Zwischenhülse 24. Entsprechend ist der Durchmesser der Statoreinrichtung 72 größer als der Durchmesser der Zwischenhülse 24 (bezogen auf die Achse 46).

Mit der Zwischenhülse 24 drehfest verbunden ist ein Halter 76 für eine Magneteinrichtung 78. Der Halter 76 weist dabei einen Haltebereich 80 auf, welcher radial zu dem Gewindebereich 48 der Zwischenhülse 24 beabstandet ist. Die Magneteinrichtung 78 liegt der Statoreinrichtung 72 mit kleinem Abstand (um eine Berührung zu vermeiden) gegenüber.

Die Magneteinrichtung 78 umfasst eine Mehrzahl von Magnetstreifen 82 aus einem permanentmagnetischen Material. Die Magnetstreifen 82 sind insbesondere flach ausgebildet. Sie können eine an den Haltebereich 80 angepasste Form wie beispielsweise eine Wölbung aufweisen. Sie sind um die Achse 46 gleichmäßig verteilt an dem Haltebereich 80 angeordnet. Insbesondere sind sie aufgeklebt. Zwischen benachbarten Magnetstreifen 82 liegt ein Luftspalt 84.

Die Magneteinrichtung 78 weist eine Länge in axialer Richtung (parallel zur Achse 46 auf), welche größer ist als die entsprechende axiale Länge der Statoreinrichtung 72. Die axiale Länge der Magnetstreifen 82 ist so gewählt, dass sowohl in der ersten Stellung 52 (Figur 1) als auch in der zweiten Stellung 54 (Figur 3) der Zwischenhülse 24 eine elektromagnetische Kopplung zwischen der Statoreinrichtung 72 und der Magneteinrichtung 78 vorliegt.

An dem Gehäuse 68 ist zentral zu der Achse 46 ein Lagerstift 86 (Lagerdorn) drehfest fixiert. Der Lagerstift 86 hält einen Winkelgeber 88 (Drehgeber), über den die Winkelstellung (Drehstellung) der Zwischenhülse 24 ermittelbar ist. Bei bekannter Winkelstellung der Zwischenhülse 24 ist auch die Linearstellung der Gewindespindel 36 bekannt. Über die von dem Winkelgeber 88 gelieferten Daten lässt sich der Elektromotor 66 ansteuern; insbesondere wird die Strombeaufschlagung der Statoreinrichtung 72 über die von dem Winkelgeber 88 gelieferten Daten gesteuert, um definierte Hubstellungen/Hubgeschwindigkeiten der Gewindespindel 36 einzustellen bzw. zu steuern.

Bei dem Winkelgeber 88 handelt es sich insbesondere um einen berührungslosen Winkelgeber wie beispielsweise einen induktiven Winkelgeber, einen kapazitiven Winkelgeber oder einen optischen Winkelgeber. Es kann sich um einen Multiturn-Resolver handeln, welcher auch Drehwinkel größer als 360° auflösen kann.

Der Winkelgeber 88 umfasst eine erste Einrichtung 90, welche drehfest bezüglich der Gewindemutter 12 ist. Die erste Einrichtung 90 sitzt insbesondere drehfest an dem Lagerstift 86.

Der Winkelgeber 88 umfasst ferner eine zweite Einrichtung 92, welche synchron mit der Zwischenhülse 24 drehbar ist.

Bei dem gezeigten Ausführungsbeispiel ist die zweite Einrichtung 92 an eine Welle 94 gekoppelt, welche um die Achse 46 drehbar in dem Gehäuse 28 gelagert ist. Die Welle 94 ist insbesondere als Hohlwelle ausgebildet, wobei in einem Innenraum 96 die erste Einrichtung 90 (und gegebenenfalls die zweite Einrichtung 92) des Winkelgebers 88 angeordnet ist.

An dem Lagerstift 86 sitzen ein oder mehrere Radiallager 98 wie beispielsweise Kugellager zur drehbaren Lagerung der Welle 94 an dem Lagerstift 86.

Die Zwischenhülse 24 weist einen Gleitbereich 100 auf, welcher insbesondere als Gleitbuchse 102 ausgebildet ist. Über diesen Gleitbereich 100 ist die Zwischenhülse 24 verschieblich auf der Welle 94 geführt, wobei die Zwischenhülse 24 über einen oder mehrere Mitnehmer derart an die Welle 94 gekoppelt ist, dass eine angetriebene Rotationsbewegung der Zwischenhülse 24 eine synchrone Rotation der Welle 94 bewirkt; dadurch wiederum wird eine Rotation der zweiten Einrichtung 92 relativ zur ersten Einrichtung 90 des Winkelgebers 88 bewirkt.

Durch die Welle 94 mit ihrer Drehlagerung über das oder die Radiallager 98 und die Gleitbuchse 102 der Zwischenhülse 24 mit ihrer Gleitführung auf der Welle 94 ist eine Dreh-Gleit-Lagereinrichtung 104 für die Zwischenhülse 24 gebildet. Durch diese Dreh-Gleit-Lagereinrichtung 104 ist die Zwischenhülse 24 im Bereich eines der Gewindemutter 12 abgewandten Endes drehbar und verschieblich in dem Gehäuse 68 gelagert, wobei die Drehbewegung der Zwischenhülse 24 auf die Welle 94 übertragbar ist, um wiederum eine Drehung der zweiten Einrichtung 92 relativ zur ersten Einrichtung 90 des Winkelgebers 88 zu bewirken.

Der erfindungsgemäße Kugelgewindetrieb 10 funktioniert wie folgt:
Über Strombeaufschlagung der Statoreinrichtung 72 des Elektromotors 66 wird aufgrund der magnetischen Kopplung mit der Magneteinrichtung 78 der Rotor 64 in einer Drehbewegung angetrieben. Die Strombeaufschlagung entscheidet dabei über die Drehrichtung. Diese Rotationsbewegung bewirkt eine Drehbewegung der Zwischenhülse 24 in der Gewindemutter 12.

Die Zwischenhülse 24 rotiert relativ zu der Gewindemutter 12, wobei die Zwischenhülse 24 über in den Gewindekanälen 14, 26 abrollenden Wälzkörper an der Gewindemutter 12 gelagert ist. Durch die Drehbewegung wird auch eine axiale Verschiebung der Zwischenhülse 24 in der Linearrichtung 50 bewirkt.

Durch die angetriebene Drehbewegung der Zwischenhülse 24 wird auch die Gewindespindel 36 in eine Drehbewegung relativ zur Zwischenhülse 24 in gegenläufiger Drehrichtung zur Drehung der Zwischenhülse 24 an der Gewindemutter 12 versetzt, wobei die Gewindespindel 36 rotationsfest bezüglich der Gewindemutter 12 ist (insbesondere wenn die Gewindespindel 36 an einem Ende an einer Anwendung fixiert ist).

Die Gewindespindel 36 ist über die Wälzkörper 34, welche in den Gewindekanälen 32, 40 der Gewindeeinrichtung 35 abrollen, in der Zwischenhülse 24 gelagert. Dadurch ergibt sich eine Art Teleskopführung für die Gewindespindel 36; durch die Teleskopführung lässt sich die Gewindespindel 36 rein translatorisch in der Linearrichtung 50 verschieben. Es ergibt sich ein großer Hubweg bei kompakter Bauweise, das heißt bei kleiner axialer Baulänge des Kugelgewindetriebs 10. Weiterhin lassen sich große Kräfte erreichen.

Durch die Ankopplung der Zwischenhülse 24 an die Dreh-Gleit-Lagereinrichtung 104 ergibt sich eine vergrößerte Lagerfläche. Die Rotationsstellung (Winkelstellung) der Zwischenhülse 24 und daraus die Linearposition der Gewindespindel 36 lässt sich zu jedem Zeitpunkt mit hoher Genauigkeit bestimmen, wodurch wiederum eine Ansteuerung der Zwischenhülse 24 zur Einstellung einer definierten Position der Gewindespindel 36 ermöglicht wird.

Durch den Elektromotor 66 lässt sich ein hohes Drehmoment auf die Zwischenhülse 24 übertragen, wobei durch das Vorsehen von flachen Magnetstreifen 82 ein kompakter Aufbau erreicht ist.

## Patentansprüche

1. Kugelgewindetrieb, umfassend eine Gewindemutter (12) mit Gewindekanälen (14) für Wälzkörper (16), eine Gewindespindel (36) mit Gewindekanälen (40) für Wälzkörper (34), eine Zwischenhülse (24), welche zwischen der Gewindemutter (12) und der Gewindespindel (36) angeordnet ist, wobei die Zwischenhülse (24) Gewindekanäle (26) aufweist, welche der Gewindemutter (12) zuweisen und an die Gewindekanäle (14) der Gewindemutter (12) angepasst sind, und Wälzkörper (16) in diesen Gewindekanälen (14, 26) geführt sind, und wobei die Zwischenhülse (24) Gewindekanäle (32) aufweist, welche der Gewindespindel (36) zugewandt sind und an deren Gewindekanäle (40) angepasst sind, und in diesen Gewindekanälen (32, 40) Wälzkörper (34) geführt sind, eine erste Gewindeeinrichtung (25), welche über die einander zuweisenden Gewindekanäle (14, 26) der Gewindemutter (12) und der Zwischenhülse (24) gebildet ist, und eine zweite Gewindeeinrichtung (35), welche über die einander zuweisenden Gewindekanäle (26, 40) der Zwischenhülse (24) und der Gewindespindel (36) gebildet ist, wobei die erste Gewindeeinrichtung (25) und die zweite Gewindeeinrichtung (35) gegenläufig zueinander sind, **dadurch gekennzeichnet, dass** drehfest mit der Zwischenhülse (24) eine Magneteinrichtung (78) verbunden ist und dass die Magneteinrichtung (78) über die Verschieblichkeit der Zwischenhülse (24) relativ zu einer Statoreinrichtung (72) verschieblich ist.

2. Kugelgewindetrieb nach Anspruch 1, **dadurch gekennzeichnet, dass** die Gewindespindel (36) relativ zur Gewindemutter (12) drehfest translationsverschieblich ist.

3. Kugelgewindetrieb nach Anspruch 1 oder 2, **dadurch gekennzeichnet, dass** die Zwischenhülse (24) relativ zur Gewindemutter (12) drehbar ist.

4. Kugelgewindetrieb nach Anspruch 1, **dadurch gekennzeichnet, dass** die Zwischenhülse (24) relativ zur Gewindemutter (12) translationsverschieblich ist.

5. Kugelgewindetrieb nach einem der vorangehenden Ansprüche, **dadurch gekennzeichnet, dass** die Gewindespindel (36) relativ zur Zwischenhülse (24) drehbar ist.

6. Kugelgewindetrieb nach einem der vorangehenden Ansprüche, **dadurch gekennzeichnet, dass** eine Wälzkörper-Rückführungseinrichtung (60) an der Gewindemutter (12) angeordnet ist.

7. Kugelgewindetrieb nach einem der vorangehenden Ansprüche, **dadurch gekennzeichnet, dass** eine Wälzkörper-Rückführungseinrichtung (62) an der Gewindespindel (36) angeordnet ist.

8. Kugelgewindetrieb nach Anspruch 6 oder 7, **dadurch gekennzeichnet, dass** eine Wälzkörper-Rückführungseinrichtung (60; 62) durch ein Umlenkrohrsystem oder Umlenkstücksystem gebildet ist.

9. Kugelgewindetrieb nach einem der vorangehenden Ansprüche, **dadurch gekennzeichnet, dass** die Gewindespindel (36) einen Gewindebereich (38) und einen Nicht-Gewindebereich (44) aufweist, welcher sich nach vorne erstreckt.

10. Kugelgewindetrieb nach Anspruch 9, **dadurch gekennzeichnet, dass** der Nicht-Gewindebereich (44) einen kleineren Durchmesser als der Gewindebereich (38) aufweist.

11. Kugelgewindetrieb nach einem der vorangehenden Ansprüche, **dadurch gekennzeichnet, dass** der maximale Hub der Gewindespindel (36) bestimmt ist durch die Summe des Hubs der Zwischenhülse (24) an der Gewindemutter (12) und des Hubs der Gewindespindel (36) an der Zwischenhülse (24).

12. Kugelgewindetrieb nach einem der vorangehenden Ansprüche, **dadurch gekennzeichnet, dass** die Zwischenhülse (24) einen Gewindebereich (48) und einen Gleitbereich (100) aufweist.

13. Kugelgewindetrieb nach Anspruch 12, **dadurch gekennzeichnet, dass** der Gleitbereich (100) an einer Dreh-Gleit-Lagereinrichtung (104) gelagert ist.

14. Kugelgewindetrieb nach Anspruch 12 oder 13, **dadurch gekennzeichnet, dass** der Gleitbereich (100) durch eine Gleitbuchse (102) gebildet ist.

15. Kugelgewindetrieb nach einem vorangehenden Ansprüche, **dadurch gekennzeichnet, dass** die Zwischenhülse (24) rotatorisch angetrieben ist.

16. Kugelgewindetrieb nach Anspruch 15, **dadurch gekennzeichnet, dass** die Zwischenhülse (24) ein Rotor (64) oder Teil eines Rotors (64) eines Motors (66) ist.

17. Kugelgewindetrieb nach einem der vorangehenden Ansprüche, **dadurch gekennzeichnet, dass** ein Motor (66) vorgesehen ist.

18. Kugelgewindetrieb nach Anspruch 17, **dadurch gekennzeichnet, dass** die Zwischenhülse eine Motorwelle (64) oder Teil einer Motorwelle (64) ist.

19. Kugelgewindetrieb nach Anspruch 17 oder 18, **dadurch gekennzeichnet, dass** der Motor ein Elektromotor (66) ist.

20. Kugelgewindetrieb nach einem der vorangehenden Ansprüche, **dadurch gekennzeichnet, dass** ein feststehender Teil des Motors (72) fest bezüglich der Gewindemutter (12) angeordnet ist.

21. Kugelgewindetrieb nach einem der Ansprüche 17 bis 20, **dadurch gekennzeichnet, dass** die Gewindemutter (12) an einem Gehäuse (68), welches den Motor (66) aufnimmt, angeordnet ist.

22. Kugelgewindetrieb nach Anspruch 21, **dadurch gekennzeichnet, dass** in dem Gehäuse (68) eine Statoreinrichtung (72) angeordnet ist.

23. Kugelgewindetrieb nach einem der vorangehenden Ansprüche, **dadurch gekennzeichnet, dass** die Magneteinrichtung (78) eine Mehrzahl von Magneten (82) aufweist, welche um eine Achse (46) der Zwischenhülse (24) angeordnet sind.

24. Kugelgewindetrieb nach Anspruch 23, **dadurch gekennzeichnet, dass** die Magnete (82) als Streifen ausgebildet sind.

25. Kugelgewindetrieb nach Anspruch 23 oder 24, **dadurch gekennzeichnet, dass** die Magnete (82) flach ausgebildet sind.

26. Kugelgewindetrieb nach einem der Ansprüche 23 bis 25, **dadurch gekennzeichnet, dass** die Magnete (82) an einem Halter (76) angeordnet sind, welcher drehfest mit der Zwischenhülse (24) verbunden ist.

27. Kugelgewindetrieb nach Anspruch 26, **dadurch gekennzeichnet, dass** der Halter (76) einen größeren Durchmesser aufweist als ein Gewindebereich (48) der Zwischenhülse (24).

28. Kugelgewindetrieb nach einem der vorangehenden Ansprüche, **dadurch gekennzeichnet, dass** die Magneteinrichtung (78) eine axiale Länge aufweist, welche größer ist als die axiale Länge einer Statoreinrichtung (72), so dass bei jeder Stellung der Zwischenhülse (24) eine elektromagnetische Kopplung zwischen der Statoreinrichtung (72) und der Magneteinrichtung (78) vorliegt.

29. Kugelgewindetrieb nach einem der vorangehenden Ansprüche, **dadurch gekennzeichnet, dass** ein Winkelgeber (88) vorgesehen ist.

30. Kugelgewindetrieb nach Anspruch 29, **dadurch gekennzeichnet, dass** der Winkelgeber (88) mit einer Motorsteuerung verbunden ist.

31. Kugelgewindetrieb nach Anspruch 29 oder 30, **dadurch gekennzeichnet, dass** der Winkelgeber (88) eine erste Einrichtung (90) aufweist, welche drehfest relativ zur Gewindemutter (12) angeordnet ist, und eine zweite Einrichtung (92) aufweist, welche mit der Zwischenhülse (24) drehbar ist.

32. Kugelgewindetrieb nach Anspruch 31, **dadurch gekennzeichnet, dass** die zweite Einrichtung (92) an einen Gleitbereich (100) der Zwischenhülse (24) gekoppelt ist.

33. Kugelgewindetrieb nach Anspruch 31 oder 32, **dadurch gekennzeichnet, dass** die zweite Einrichtung (92) an eine Welle (94) gekoppelt ist, welche drehbar gelagert ist und an welcher die Zwischenhülse (24) verschieblich gelagert ist.

34. Kugelgewindetrieb nach Anspruch 33, **dadurch gekennzeichnet, dass** die Welle (94) an die Zwischenhülse (24) so gekoppelt ist, dass diese durch die Drehbewegung der Zwischenhülse (24) in einer synchronen Drehbewegung angetrieben ist.

35. Verfahren zur Verschiebung einer Gewindespindel bei einem Kugelgewindetrieb, nach Anspruch 1, **dadurch gekennzeichnet, dass** die Winkelstellung der Zwischenhülse über einen Winkelgeber ermittelt wird und dass der Antrieb der Zwischenhülse mittels der durch den Winkelgeber ermittelten Winkelstellung gesteuert wird.

36. Verfahren nach Anspruch 35, **dadurch gekennzeichnet, dass** die Zwischenhülse über einen Elektromotor angetrieben wird.

## Claims

1. Ball screw, comprising a threaded nut (12) with thread channels (14) for rolling bodies (16), a threaded spindle (36) with thread channels (40) for rolling bodies (34), an intermediate bush (24), which is arranged between the threaded nut (12) and the threaded spindle (36), wherein the intermediate bush (24) has thread channels (26), which face the threaded nut (12) and are adapted to the thread channels (14) of the threaded nut (12), and rolling bodies (16) are guided in these thread channels (14, 26), and wherein the intermediate bush (24) has thread channels (32), which face the threaded spindle (36) and are adapted to its thread channels (40), and rolling bodies (34) are guided in these thread channels (32, 40), a first threaded arrangement (25), which is formed by means of the thread channels (14, 26) of the threaded nut (12) and the intermediate bush (24) facing one another, and a second threaded arrangement (35), which is formed by means of the thread channels (26, 40) of the intermediate bush (24) and the threaded spindle (36) facing one another, the first threaded arrangement (25) and the second threaded arrangement (35) operating in opposite directions, **characterised in that** a magnet device (78) is relatively non-rotatably connected to the intermediate bush (24), and **in that** the magnet device (78) is displaceable relative to a stator device (72) by means of the displaceability of the intermediate bush (24).

2. Ball screw according to claim 1, **characterised in that** the threaded spindle (36) is displaceable in a translatory non-rotatable manner relative to the threaded nut (12).

3. Ball screw according to claim 1 or 2, **characterised in that** the intermediate bush (24) is rotatable relative to the threaded nut (12).

4. Ball screw according to claim 1, **characterised in that** the intermediate bush (24) is displaceable in a translatory manner relative to the threaded nut (12).

5. Ball screw according to any one of the preceding claims, **characterised in that** the threaded spindle (36) is rotatable relative to the intermediate bush (24).

6. Ball screw according to any one of the preceding claims, **characterised in that** a rolling body return device (60) is arranged on the threaded nut (12).

7. Ball screw according to any one of the preceding claims, **characterised in that** a rolling body return device (62) is arranged on the threaded spindle (36).

8. Ball screw according to claim 6 or 7, **characterised in that** a rolling body return device (60; 62) is formed by a return duct system or return piece system.

9. Ball screw according to any one of the preceding claims, **characterised in that** the threaded spindle (36) has a threaded region (38) and a non-threaded region (44) which extends to the front.

10. Ball screw according to claim 9, **characterised in that** the non-threaded region (44) has a smaller diameter than the threaded region (38).

11. Ball screw according to any one of the preceding claims, **characterised in that** the maximal travel of the threaded spindle (36) is determined by the sum of the travel of the intermediate bush (24) on the threaded nut (12) and the travel of the threaded spindle (36) on the intermediate bush (24).

12. Ball screw according to any one of the preceding claims, **characterised in that** the intermediate bush (24) has a threaded region (48) and a sliding region (100).

13. Ball screw according to claim 12, **characterised in that** the sliding region (100) is mounted on a rotating-sliding bearing device (104).

14. Ball screw according to claim 12 or 13, **characterised in that** the sliding region (100) is formed by a sliding bushing (102).

15. Ball screw according to any one of the preceding claims, **characterised in that** the intermediate bush (24) is driven in a rotatory manner.

16. Ball screw according to claim 15, **characterised in that** the intermediate bush (24) is a rotor (64) or part of a rotor (64) of a motor (66).

17. Ball screw according to any one of the preceding claims, **characterised in that** a motor (66) is provided.

18. Ball screw according to claim 17, **characterised in that** the intermediate bush is a motor shaft (64) or part of a motor shaft (64).

19. Ball screw according to claim 17 or 18, **characterised in that** the motor is an electric motor (66).

20. Ball screw according to any one of the preceding claims, **characterised in that** a fixed part of the motor (72) is fixedly arranged with respect to the threaded nut (12).

21. Ball screw according to any one of claims 17 to 20, **characterised in that** the threaded nut (12) is arranged on a housing (68) which receives the motor (66).

22. Ball screw according to claim 21, **characterised in that** a stator device (72) is arranged in the housing (68).

23. Ball screw according to any one of the preceding claims, **characterised in that** the magnet device (78) has a plurality of magnets (82) which are arranged about an axis (46) of the intermediate bush (24).

24. Ball screw according to claim 23, **characterised in that** the magnets (82) are configured as strips.

25. Ball screw according to claim 23 or 24, **characterised in that** the magnets (82) have a flat configuration.

26. Ball screw according to any one of claims 23 to 25, **characterised in that** the magnets (82) are arranged on a holder (76) which is relatively non-rotatably connected to the intermediate bush (24).

27. Ball screw according to claim 26, **characterised in that** the holder (76) has a larger diameter than a threaded region (48) of the intermediate bush (24).

28. Ball screw according to any one of the preceding claims, **characterised in that** the magnet device (78) has an axial length, which is greater than the axial length of a stator device (72), so that at each position of the intermediate bush (24), an electromagnetic coupling is present between the stator device (72) and the magnet device (78).

29. Ball screw according to any one of the preceding claims, **characterised in that** an angle sensor (88) is provided.

30. Ball screw according to claim 29, **characterised in that** the angle sensor (88) is connected to a motor controller.

31. Ball screw according to claim 29 or 30, **characterised in that** the angle sensor (88) has a first device (90) which is arranged so as to be non-rotatable relative to the threaded nut (12), and has a second device (92) which is rotatable with the intermediate bush (24).

32. Ball screw according to claim 31, **characterised in that** the second device (92) is coupled to a sliding region (100) of the intermediate bush (24).

33. Ball screw according to claim 31 or 32, **characterised in that** the second device (92) is coupled to a shaft (94) which is rotatably mounted and on which the intermediate bush (24) is displaceably mounted.

34. Ball screw according to claim 33, **characterised in that** the shaft (94) is coupled to the intermediate bush (24) in such a way that it is driven by the rotary movement of the intermediate bush (24) in a synchronous rotary movement.

35. Method for displacing a threaded spindle in a ball screw according to claim 1, **characterised in that** the angular position of the intermediate bush is determined by an angle sensor, and **in that** the drive of the intermediate bush is controlled by means of the angular position determined by the angle sensor.

36. Method according to claim 35, **characterised in that** the intermediate bush is driven by an electric motor.

## Revendications

1. Vis d'entraînement à billes, comprenant un écrou fileté (12) avec des canaux de filetage (14) pour des corps de roulement (16), une broche filetée (36) avec des canaux de filetage (40) pour des corps de roulement (34), une douille intermédiaire (24) qui est disposée entre l'écrou fileté (12) et la broche filetée (36), la douille intermédiaire (24) présentant des canaux de filetage (26) qui sont dirigés vers l'écrou fileté (12) et sont adaptés aux canaux de filetage (14) de l'écrou fileté (12), et des corps de roulement (16) étant guidés dans ces canaux de filetage (14, 16), et la douille intermédiaire (24) présentant des canaux de filetage (32) qui sont dirigés vers la broche filetée (36) et sont adaptés aux canaux de filetage (40), et dans ces canaux de filetage (32, 40) étant guidés des corps de roulement (34), un premier dispositif de filetage (25) qui est formé par les canaux de filetage (14, 26) tournés l'un vers l'autre de l'écrou fileté (12) et de la douille intermédiaire (24), et un second dispositif de filetage (35) qui est formé par les canaux de filetage (26, 40) dirigés l'un vers l'autre de la douille intermédiaire (24) et de la broche filetée (36), le premier dispositif de filetage (25) et le second dispositif de filetage (35) étant de sens opposés, **caractérisée en ce qu'**un dispositif magnétique (78) est relié de manière solidaire en rotation à la douille intermédiaire (24) et **en ce que** le dispositif magnétique (78) est mobile par la mobilité de la douille intermédiaire (24) par rapport à un dispositif de stator (72).

2. Vis d'entraînement à billes selon la revendication 1, **caractérisé en ce que** la broche filetée (36) est mobile en translation de manière solidaire en rotation par rapport à l'écrou fileté (12).

3. Vis d'entraînement à billes selon la revendication 1 ou 2, **caractérisée en ce que** la douille intermédiaire (24) peut être tournée par rapport à l'écrou fileté (12).

4. Vis d'entraînement à billes selon la revendication 1, **caractérisé en ce que** la douille intermédiaire (24) est mobile en translation par rapport à l'écrou fileté (12).

5. Vis d'entraînement à billes selon l'une quelconque des revendications précédentes, **caractérisée en ce que** la broche filetée (36) peut être tournée par rapport à la douille intermédiaire (24).

6. Vis d'entraînement à billes selon l'une quelconque des revendications précédentes, **caractérisée en ce qu'**un dispositif d'asservissement des corps de roulement (60) est disposé sur l'écrou fileté (12).

7. Vis d'entraînement à billes selon l'une quelconque des revendications précédentes, **caractérisée en ce qu'**un dispositif d'asservissement des corps de roulement (62) est disposé sur la broche filetée (36).

8. Vis d'entraînement à billes selon la revendication 6 ou 7, **caractérisée en ce qu'**un dispositif d'asservissement de corps de roulement (60 ; 62) est formé par un système de tube de déviation ou système de pièce de déviation.

9. Vis d'entraînement à billes selon l'une quelconque des revendications précédentes, **caractérisée en ce que** la broche filetée (36) présente une zone filetée (38) et une zone non filetée (44) qui s'étend vers l'avant.

10. Vis d'entraînement à billes selon la revendication 9, **caractérisée en ce que** la zone non filetée (44) présente un diamètre plus petit que la zone filetée (38).

11. Vis d'entraînement à billes selon l'une quelconque des revendications précédentes, **caractérisée en ce que** la course maximale de la broche filetée (36) est déterminée par la somme de la course de la douille intermédiaire (24) sur l'écrou fileté (12) et de la course de la broche filetée (36) sur la douille intermédiaire (24).

12. Vis d'entraînement à billes selon l'une quelconque des revendications précédentes, **caractérisée en ce que** la douille intermédiaire (24) présente une zone filetée (48) et une zone de glissement (100).

13. Vis d'entraînement à billes selon la revendication 12, **caractérisée en ce que** la zone de glissement (100) est logée sur un dispositif de palier rotatif et glissant (104).

14. Vis d'entraînement à billes selon la revendication 12 ou 13, **caractérisée en ce que** la zone de glissement (100) est formée par une douille de glissement (102).

15. Vis d'entraînement à billes selon l'une quelconque des revendications précédentes, **caractérisée en ce que** la douille intermédiaire (24) est entraînée par rotation.

16. Vis d'entraînement à billes selon la revendication 15, **caractérisée en ce que** la douille intermédiaire (24) est un rotor (64) ou une partie d'un rotor (64) d'un moteur (66).

17. Vis d'entraînement à billes selon l'une quelconque des revendications précédentes, **caractérisée en ce qu'**un moteur (66) est prévu.

18. Vis d'entraînement à billes selon la revendication 17, **caractérisée en ce que** la douille intermédiaire est un arbre du moteur (64) ou une partie d'un arbre du moteur (64).

19. Vis d'entraînement à billes selon la revendication 17 ou 18, **caractérisée en ce que** le moteur est un moteur électrique (66).

20. Vis d'entraînement à billes selon l'une quelconque des revendications précédentes, **caractérisée en ce qu'**une partie fixe du moteur (72) est disposée fixement par rapport à l'écrou fileté (12).

21. Vis d'entraînement à billes selon l'une quelconque des revendications 17 à 20, **caractérisée en ce que** l'écrou fileté (12) est disposé sur un boîtier (68) qui reçoit le moteur (66).

22. Vis d'entraînement à billes selon la revendication 21, **caractérisée en ce qu'**un dispositif de stator (72) est disposé dans le boîtier (68).

23. Vis d'entraînement à billes selon l'une quelconque des revendications précédentes, **caractérisée en ce que** le dispositif magnétique (78) présente une pluralité d'aimants (82) qui sont disposés autour d'un axe (46) de la douille intermédiaire (24).

24. Vis d'entraînement à billes selon la revendication 23, **caractérisée en ce que** les aimants (82) sont réalisés comme des bandes.

25. Vis d'entraînement à billes selon la revendication 23 ou 24, **caractérisée en ce que** les aimants (82) sont réalisés plats.

26. Vis d'entraînement à billes selon l'une quelconque des revendications 23 à 25, **caractérisée en ce que** les aimants (82) sont disposés sur un support (76) qui est relié de manière solidaire en rotation à la douille intermédiaire (24).

27. Vis d'entraînement à billes selon la revendication 26, **caractérisée en ce que** le support (76) présente un diamètre plus grand qu'une zone filetée (48) de la douille intermédiaire (24).

28. Vis d'entraînement à billes selon l'une quelconque des revendications précédentes' **caractérisée en ce que** le dispositif magnétique (78) présente une longueur axiale qui est plus grande que la longueur axiale d'un dispositif de stator (72) de sorte que pour chaque position de la douille intermédiaire (24) se présente un couplage électromagnétique entre le dispositif de stator (72) et le dispositif magnétique (78).

29. Vis d'entraînement à billes selon l'une quelconque des revendications précédentes, **caractérisée en ce qu'**un capteur angulaire (88) est prévu.

30. Vis d'entraînement à billes selon la revendication 29, **caractérisée en ce que** le capteur angulaire (88) est relié à une commande moteur.

31. Vis d'entraînement à billes selon la revendication 29 ou 30, **caractérisée en ce que** le capteur angulaire (88) présente un premier dispositif (90) qui est disposé de manière solidaire en rotation par rapport à l'écrou fileté (12) et présente un second dispositif (92) qui peut être tourné avec la douille intermédiaire (24).

32. Vis d'entraînement à billes selon la revendication 31, **caractérisée en ce que** le second dispositif (92) est couplé à une zone de glissement (100) de la douille intermédiaire (24).

33. Vis d'entraînement à billes selon la revendication 31 ou 32, **caractérisée en ce que** le second dispositif (92) est couplé à un arbre (94) qui est logé de manière rotative et sur lequel la douille intermédiaire (24) est logée de manière mobile.

34. Vis d'entraînement à billes selon la revendication 33, **caractérisée en ce que** l'arbre (94) est couplé à la douille intermédiaire (24) de sorte que celui-ci soit entraîné par le mouvement rotatif de la douille intermédiaire (24) dans un mouvement de rotation synchrone.

35. Procédé de déplacement d'une broche filetée pour une vis d'entraînement à billes selon la revendication 1, **caractérisé en ce que** la position angulaire de la douille intermédiaire est déterminée par un capteur d'angle et **en ce que** l'entraînement de la douille intermédiaire est commandé à l'aide de la position angulaire déterminée par le capteur d'angle.

36. Procédé selon la revendication 35, **caractérisé en ce que** la douille intermédiaire est entraînée par un moteur électrique.
